# EUROPEAN PATENT APPLICATION

(11) **EP 4 574 879 A1**
(43) Date of publication of application: **25.06.2025**
(21) Application number: 24215645.3
(22) Date of filing: 27.11.2024
(51) Int. Cl.: C08G 63/18, C08K 5/00, C08L 67/02

(54) **BIODEGRADABLE RESIN COMPOSITION AND BIODEGRADABLE NONWOVEN FABRIC INCLUDING THE SAME**

(30) Priority: 20.12.2023 KR 20230186606
(71) Applicant: SK leaveo Co., Ltd., Gyeonggi-do 16338 (KR)
(72) Inventor: LEE, Moon Hyun, 16338 Suwon-si, Gyeonggi-do (KR); KIM, Kyung Youn, 16338 Suwon-si, Gyeonggi-do (KR); KIM, Seong Dong, 16338 Suwon-si, Gyeonggi-do (KR); YOU, Kyoung Hwan, 16338 Suwon-si, Gyeonggi-do (KR); KIM, Hoon, 16338 Suwon-si, Gyeonggi-do (KR); BYEON, Jun Su, 16338 Suwon-si, Gyeonggi-do (KR); LEE, Hyeri, 16338 Suwon-si, Gyeonggi-do (KR)
(74) Representative: Isarpatent

(57) **Abstract**

The present invention relates to a biodegradable resin composition and a biodegradable nonwoven fabric including the same, and more particularly, the biodegradable resin composition includes a biodegradable resin including a first repeating unit derived from a diol having 2 to 4 carbon atoms and a second repeating unit derived from an aliphatic dicarboxylic acid having 2 to 6 carbon atoms; and an inorganic nucleating agent, wherein the biodegradable resin composition has a crystallinity of 15 % to 50 % as measured using differential scanning calorimetry.

## Description

### [Technical Field]

The present invention relates to a biodegradable resin composition and a biodegradable nonwoven fabric including the same.

### [Background Art]

Polyethylene, polypropylene, and polyethylene terephthalate have been used as materials for clothing fibers, nonwoven fabrics, etc. As concerns about environmental issues have increased in recent years, solutions are needed to address the discard issue of short-lived clothing fibers and disposable nonwoven fabrics.

As a solution to these issues, research on biodegradable resins is actively being conducted. Polylactic acid (PLA), polybutylene adipate terephthalate (PBAT), and polybutylene succinate (PBS) are being introduced as biodegradable resins.

However, a biodegradable resin has poor spinning ability compared to other materials, so it has limitations in manufacturing fibers or nonwoven fabrics.

In addition, to improve the spinning ability of a biodegradable resin, various biodegradable resins were combined, but the miscibility between biodegradable resins with different properties was reduced, resulting in problems such as fiber-to-fiber fusion or fiber breakage after spinning.

### [Disclosure]

### [Technical Problem]

Therefore, the present invention has been made in view of the above problems, and it is one object of the present invention to provide a biodegradable resin composition having excellent biodegradability and improved spinning ability, and a biodegradable nonwoven fabric including the same.

### [Technical Solution]

In accordance with an aspect of the present invention, the above and other objects can be accomplished by the provision of a biodegradable resin composition, including: a biodegradable resin including a first repeating unit derived from a diol having 2 to 4 carbon atoms and a second repeating unit derived from an aliphatic dicarboxylic acid having 2 to 6 carbon atoms; and an inorganic nucleating agent, wherein the biodegradable resin composition has a crystallinity of 15 % to 50 % as measured using differential scanning calorimetry.

In an embodiment of the present invention, a molar ratio of the first repeating unit:the second repeating unit may be 4:1 to 1:1.

In an embodiment of the present invention, the biodegradable resin may further include a third repeating unit derived from aromatic dicarboxylic acid.

In an embodiment of the present invention, a molar ratio of the first repeating unit:the third repeating unit may be 10:3 to 10:7.

In an embodiment of the present invention, a molar ratio of the second repeating unit:the third repeating unit may be 3:2 to 2:3.

In an embodiment of the present invention, the inorganic nucleating agent may be included in a content of 10 ppm to 10,000 ppm based on a total weight of the biodegradable resin composition.

In an embodiment of the present invention, the inorganic nucleating agent may include one or more selected from the group consisting of titanium dioxide, talc, kaolinite, montmorillonite, mica, clay, zeolite, silica, graphite, carbon black, mica, barium sulfate, calcium silicate, calcium carbonate, calcium sulfide, calcium titanate, zinc oxide, aluminum oxide, magnesium oxide, neodymium oxide, and boron nitride.

In an embodiment of the present invention, the biodegradable resin composition may include nanocellulose having an average length of 10 nm to 300 nm.

In an embodiment of the present invention, the nanocellulose may be included in a content of 10 ppm to 500 ppm based on a total weight of the biodegradable resin composition.

In an embodiment of the present invention, the biodegradable resin composition may include a branching agent including at least one of a trivalent or higher alcohol and a trivalent or higher carboxylic acid.

In an embodiment of the present invention, the content of the branching agent may be included in a content of 500 ppm to 3,000 ppm based on a total weight of the biodegradable resin composition.

In an embodiment of the present invention, the biodegradable resin composition may have a melt flow rate of 10 g/10 min to 25 g/10 min, as measured under conditions of 190 °C and 2.16 kg.

In an embodiment of the present invention, the biodegradable resin composition may have an adhesive strength of 5 kgf or less according to Measurement Method 1 below:

### [Measurement Method 1]

1) The biodegradable resin composition is compressed at 210 °C under a pressure of 10 MPa for 3 minutes to produce sheets having a width of 20 mm, a length of 100 mm, and a thickness of 0.3 mm.
2) Two of the sheets are placed horizontally with a length of 75 mm facing each other, and then bonded at 90 °C under a pressure of 5 MPa for 10 minutes.
3) To measure an adhesive strength of the two bonded sheets, a 180° lap shear test is performed at a tensile speed of 100 mm/min.

In an embodiment of the present invention, the biodegradable resin composition may have an isothermal crystallization time of 10 seconds to 300 seconds at 70 °C according to Measurement Method 2 below:

### [Measurement Method 2]

1) The biodegradable resin composition is heated up to 220 °C at a heating rate of 10 °C/min, and then maintained for 5 minutes.
2) Next, the biodegradable resin composition is cooled up to 70 °C at a cooling rate of 100 °C/min, and then an isothermal state is maintained for 100 minutes.

In accordance with another aspect of the present invention, there is provided a biodegradable nonwoven fabric, including a biodegradable resin composition, the biodegradable resin composition including: a biodegradable resin including a first repeating unit derived from a diol having 2 to 4 carbon atoms and a second repeating unit derived from an aliphatic dicarboxylic acid having 2 to 6 carbon atoms; and an inorganic nucleating agent, wherein the biodegradable resin composition has a crystallinity of 15 % to 50 %, as measured using differential scanning calorimetry.

### [Advantageous effects]

A biodegradable resin composition according to the present invention can have a crystallinity in a range of 15 % to 50 % by controlling the type of a monomer of a biodegradable resin and including an inorganic nucleating agent.

Accordingly, the biodegradable resin composition can have a melt flow rate, melting point, isothermal crystallization time, and adhesive strength that allow it to be produced into a nonwoven fabric by a spinning process.

Therefore, the biodegradable resin composition can suppress the phenomenon of fiber breakage during a spinning process.

In addition, the biodegradable resin composition does not exhibit fiber-to-fiber fusion even if rapid quenching is not performed after spinning, thereby being capable of controlling the denier of fibers.

In addition, fibers manufactured from the biodegradable resin composition can exhibit appropriate drape properties, so that the phenomenon of fiber breakage during a spinning process can be suppressed, and produced fibers can have improved texture.

In addition, a biodegradable nonwoven fabric manufactured from the biodegradable resin composition is naturally biodegradable at the end of its life, so it does not require incineration or emit harmful substances.

### [Description of Drawings]

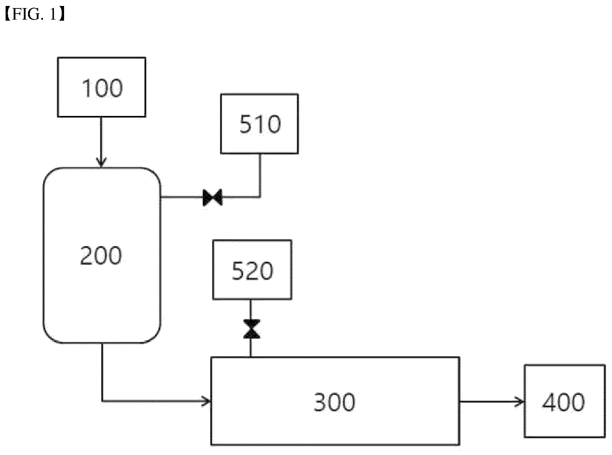

FIG. 1 schematically illustrates an apparatus for preparing a biodegradable resin composition according to an embodiment.

### [Best Mode]

Structural or functional descriptions of embodiments disclosed in the present specification or application are merely illustrated for the purpose of explaining embodiments according to the technical idea of the present invention, embodiments according to the technical idea of the present invention may be implemented in various forms other than the embodiments disclosed in the present specification or application, and it is not to be construed that the technical idea of the present invention is limited to the embodiments described in the present specification or application.

In the present specification or application, when a certain component is "included", this indicates that only the component is included or the component may further include another component unless there is no different disclosure. In addition, it should be understood that all numerical ranges representing physical property values, dimensions, etc. of components described in the present specification or application are modified by the term 'about' in all cases unless otherwise specified.

In addition, in the present specification or the present application, 'ppm' is based on the weight.

In addition, in the present specification or the present application, "derived" means a component, structure, or substance from a substance itself.

Hereinafter, a biodegradable resin composition according to the present invention and a biodegradable nonwoven fabric including the same are described.

A biodegradable resin composition according to the present invention includes a biodegradable resin including a first repeating unit derived from a diol having 2 to 4 carbon atoms and a second repeating unit derived from an aliphatic dicarboxylic acid having 2 to 6 carbon atoms, and an inorganic nucleating agent, and has a crystallinity of 15 % to 50 % as measured using differential scanning calorimetry.

The biodegradable resin composition according to the present invention includes a biodegradable resin. The biodegradable resin includes the first repeating unit derived from a diol having 2 to 4 carbon atoms and the second repeating unit derived from an aliphatic dicarboxylic acid having 2 to 6 carbon atoms.

The diol may be an aliphatic diol. The diol may be a bio-derived diol. The diol may be at least one selected from the group consisting of ethylene glycol, 1,2-propanediol, 1,3-propanediol, 2-methyl-1,3-propanediol, 1,2-butanediol, 1,4-butanediol, and derivatives thereof.

Preferably, the diol may include at least one of ethylene glycol and 1,4-butanediol.

A biodegradable resin including the first repeating unit derived from a diol having 2 to 4 carbon atoms may have an appropriate melt flow rate, melting point, isothermal crystallization time, and adhesive strength, and thus, may be manufactured into a nonwoven fabric by a spinning process.

The aliphatic dicarboxylic acid may be at least one selected from the group consisting of oxalic acid, malonic acid, succinic acid, glutaric acid, adipic acid, suberic acid, and derivatives thereof.

Preferably, the aliphatic dicarboxylic acid may include at least one of succinic acid and adipic acid.

The biodegradable resin including the second repeating unit derived from an aliphatic dicarboxylic acid having 2 to 6 carbon atoms may have an appropriate melt flow rate, melting point, isothermal crystallization time, and adhesive strength, so that the phenomenon of fiber breakage in the spinning process may be suppressed, and the fiber-to-fiber fusion does not occur. Accordingly, the denier of fibers may be controlled.

The biodegradable resin may further include a third repeating unit derived from aromatic dicarboxylic acid.

The aromatic dicarboxylic acid may be at least one selected from the group consisting of phthalic acid, terephthalic acid, isophthalic acid, 1,4-naphthalenedicarboxylic acid, 1,5-naphthalenedicarboxylic acid, 2,6-naphthalenedicarboxylic acid, 1,8-naphthalenedicarboxylic acid, 4,4'-diphenyldicarboxylic acid, 4,4'-diphenyletherdicarboxylic acid, anthracenedicarboxylic acid, phenanthrenedicarboxylic acid and derivatives thereof.

The aromatic dicarboxylic acid may be at least one selected from the group consisting of terephthalic acid, dimethyl terephthalate, 2,6-naphthalene dicarboxylic acid, isophthalic acid and derivatives thereof.

Preferably, the aromatic dicarboxylic acid may include terephthalic acid, dimethyl terephthalate and derivatives thereof.

The biodegradable resin including the third repeating unit derived from aromatic dicarboxylic acid may have improved tensile strength and elongation.

A molar ratio of the first repeating unit:the second repeating unit may be 4:1 to 1:1. The molar ratio of the first repeating unit:the second repeating unit may be 4:1.5 to 1:1. The molar ratio of the first repeating unit:the second repeating unit may be 4:2 to 1:1. Preferably, the molar ratio of the first repeating unit:the second repeating unit may be 4:2.12 to 1:1. When the range is satisfied, the biodegradable resin composition may have improved spinning ability.

The molar ratio of the first repeating unit to the second repeating unit refers to a molar ratio of the first repeating unit derived from a diol having 2 to 4 carbon atoms to the second repeating unit derived from an aliphatic dicarboxylic acid having 2 to 6 carbon atoms.

A molar ratio of the first repeating unit:the third repeating unit 10:3 to 10:7. The molar ratio of the first repeating unit:the third repeating unit may be 10:3 to 10:6. The molar ratio of the first repeating unit:the third repeating unit may be 10:3 to 10:6. Preferably, the molar ratio of the first repeating unit:the third repeating unit may be 10:4 to 10:5. When the range is satisfied, a nonwoven fabric manufactured from the biodegradable resin composition may have improved tensile strength and elongation.

The molar ratio of the first repeating unit to the third repeating unit refers to a molar ratio of the first repeating unit derived from a diol having 2 to 4 carbon atoms to the third repeating unit derived from aromatic dicarboxylic acid.

A molar ratio of the second repeating unit:the third repeating unit may be 3:2 to 2:3. The molar ratio of the second repeating unit:the third repeating unit may be 3:2 to 2.5:3. The molar ratio of the second repeating unit:the third repeating unit may be 3:2 to 3:3. Preferably, The molar ratio of the second repeating unit:the third repeating unit may be 3:2 to 3:2.8. When the range is satisfied, the biodegradable resin composition may have improved spinning ability, and a nonwoven fabric manufactured from the biodegradable resin composition may have improved tensile strength and elongation.

The molar ratio of the second repeating unit to the third repeating unit refers to a molar ratio of the second repeating unit derived from an aliphatic dicarboxylic acid having 2 to 6 carbon atoms to the third repeating unit derived from aromatic dicarboxylic acid.

The biodegradable resin may be polybutylene adipate terephthalate (PBAT).

The biodegradable resin may be polybutylene succinate terephthalate (PBST).

The biodegradable resin may be polybutylene adipate succinate (PBAS).

The biodegradable resin may be polybutylene adipate succinate terephthalate (PBAST).

The biodegradable resin may be polyethylene adipate succinate terephthalate (PEAST).

A number average molecular weight of the biodegradable resin may be 30,000 g/mol to 50,000 g/mol, 31,000 g/mol to 50,000 g/mol, 32,000 g/mol to 50,000 g/mol, 33,000 g/mol to 50,000 g/mol, 33,000 g/mol to 45,000 g/mol, 33,000 g/mol to 42,000 g/mol, or 33,000 g/mol to 40,000 g/mol.

A weight average molecular weight of the biodegradable resin may be 60,000 g/mol to 100,000 g/mol, 60,000 g/mol to 95,000 g/mol, 60,000 g/mol to 93,000 g/mol, 63,000 g/mol to 93,000 g/mol, 65,000 g/mol to 93,000 g/mol, or 70,000 g/mol to 90,000 g/mol.

A polydispersity index of the biodegradable resin may be 1.5 to 3.0, 1.8 to 3.0, 2.0 to 2.8, 2.0 to 2.7, 2.0 to 2.6, or 2.0 to 2.5.

When the number average molecular weight range, the weight average molecular weight range, and the polydispersity index range are satisfied, excellent spinning ability may be provided and tensile strength may be improved.

The number average molecular weight, weight average molecular weight, and polydispersity index of the biodegradable resin may be measured under the following conditions:
- Analytical instrument: Agilent company 1260 Infinity
- Detector: Agilent company G1362A RI-detector
- Column type: Waters company styragel^{®} HR4 THF 7.8 × 300mm
- Solvent: THF
- Temperature: 40 °C
- Flow rate: 1 mL/min
- Concentration: 4 mg/mL

The biodegradable resin composition according to the present invention includes an inorganic nucleating agent. The inorganic nucleating agent may refer to a nucleating agent composed of an inorganic compound. As the biodegradable resin composition includes the inorganic nucleating agent, a crystallization rate may be improved, so that fiber-to-fiber fusion may be suppressed during a spinning process, thereby enabling denier control. In addition, a uniform nano-sized fiber phase may be formed, and bead formation may be suppressed during the production of a nonwoven fabric.

The inorganic nucleating agent may include one or more selected from the group consisting of titanium dioxide, talc, kaolinite, montmorillonite, mica, clay, zeolite, silica, graphite, carbon black, mica, barium sulfate, calcium silicate, calcium carbonate, calcium sulfide, calcium titanate, zinc oxide, aluminum oxide, magnesium oxide, neodymium oxide, and boron nitride. Preferably, the inorganic nucleating agent may include titanium dioxide (TiO₂). As the titanium dioxide, at least one of Full Dull (FD) TiO₂ with almost no gloss and Semi Dull (SD) TiO₂ with a slight gloss may be used.

The content of the inorganic nucleating agent may be 10 ppm to 10,000 ppm, 100 ppm to 10,000 ppm, 300 ppm to 10,000 ppm, 500 ppm to 10,000 ppm, 500 ppm to 5,000 ppm, or 1,000 ppm to 3,000 ppm based on the total weight of the biodegradable resin composition. When the range is satisfied, the crystallinity of the biodegradable resin composition may be adjusted in a range of 15 % to 50 %, so that the phenomenon of fiber breakage during a spinning process may be suppressed, and a spinning process may be smoothly performed.

The biodegradable resin composition may include nanocellulose having an average length of 10 nm to 300 nm, 10 nm to 200 nm, 20 nm to 200 nm, or 30 nm to 200 nm. The content of the nanocellulose may be 10 ppm to 500 ppm, 50 ppm to 500 ppm, 50 ppm to 300 ppm, or 50 ppm to 200 ppm based on the total weight of the biodegradable resin composition. When the range is satisfied, a crystallization rate may be improved, so that fiber-to-fiber fusion may be suppressed during a spinning process, thereby enabling denier control.

The nanocellulose may be subjected to bead mill pre-treatment or ultrasonic pre-treatment. The nanocellulose may be subjected to bead mill pre-treatment and ultrasonic pre-treatment. The nanocellulose is preferably subjected to ultrasonic pre-treatment after being subjected to bead mill pre-treatment, so that re-agglomeration may be prevented and, accordingly, dispersibility may be improved.

The bead mill pre-treatment may be performed using a vertical mill or a horizontal mill as a wet milling device. The horizontal mill is preferable in that it can fill a larger amount of beads inside a chamber, reduce the uneven wear of a machine, reduce bead wear, and make maintenance easier, but the present invention is not limited thereto.

The bead mill pre-treatment may be performed using beads made of one or more selected from the group consisting of zirconium, zircon, zirconia, quartz and aluminum oxide.

The bead mill pre-treatment may be performed using beads having a diameter of about 0.3 mm to about 1 mm. For example, the diameter of the bead may be about 0.3 mm to about 0.9 mm, about 0.4 mm to about 0.8 mm, about 0.45 mm to about 0.7 mm or about 0.45 mm to about 0.6 mm. When the range is satisfied, the nanocellulose may have improved dispersibility.

The ultrasonic pretreatment is a method of physically breaking up or pulverizing nanoparticles by waves generated by emitting ultrasonic waves of 20 kHz into a solution.

The ultrasonic pre-treatment may be performed for less than 30 minutes at an output of 30,000 J/s or less. For example, the ultrasonic pre-treatment may be performed for 25 minutes or less, 20 minutes or less or 18 minutes or less at an output of 25,000 J/s or less or 22,000 J/s or less. When the range is satisfied, the ultrasonic pre-treatment effect, i.e., dispersibility improvement, may be maximized.

The biodegradable resin composition may include a branching agent including at least one of a trivalent or higher alcohol and a trivalent or higher carboxylic acid. The branching agent may react with the diol, the aliphatic dicarboxylic acid, and/or an aromatic dicarboxylic acid. The branching agent may be included as a part of the molecular structure of the biodegradable resin.

The trivalent or higher alcohol may be at least one selected from the group consisting of glycerol, pentaerythritol and trimethylolpropane.

The trivalent or higher carboxylic acid may be at least one selected from the group consisting of methane tricarboxylic acid, ethanetricarboxylic acid, citric acid, benzene-1,3,5-tricarboxylic acid, 5-sulfo-1,2,4-benzenetricarboxylic acid, ethane-1,1,2,2-tetracarboxylic acid, propane-1,1,2,3-tetracarboxylic acid, butane-1,2,3,4-tetracarboxylic acid, cyclopentane-1,2,3,4-tetracarboxylic acid, and benzene-1,2,4,5-tetracarboxylic acid.

Preferably, the branching agent may include glycerol.

The content of the branching agent may be 500 ppm to 3,000 ppm, 700 ppm to 3,000 ppm, 700 ppm to 2,500 ppm, or 1,000 ppm to 2,000 ppm based on the total weight of the biodegradable resin composition. When the range is satisfied, a nonwoven fabric manufactured from the biodegradable resin composition may have appropriate biodegradability and improved mechanical properties.

The biodegradable resin composition may include a heat stabilizer. The heat stabilizer may be at least one selected from the group consisting of an amine-based high-temperature heat stabilizer such as tetraethylenepentamine, triethylphosphonoacetate, phosphoric acid, phosphorous acid, polyphosphric acid, trimethyl phosphate (TMP), triethyl phosphate, trimethyl phosphine, triphenyl phosphine and the like.

Preferably, the heat stabilizer may include triethylphosphonoacetate.

The content of the heat stabilizer may be 10 ppm to 3,000 ppm, 20 ppm to 2,000 ppm, 20 ppm to 1,500 ppm or 20 ppm to 1,000 ppm based on the total weight of the biodegradable resin composition. When the range is satisfied, polymer deterioration due to high temperature during the reaction process may be controlled, thereby reducing the terminal group of the polymer and improving the color.

The biodegradable resin composition may include a lubricant.

The lubricant may include at least one selected from the group consisting of a fatty acid-based lubricant including stearic acid, an aliphatic alcohol-based lubricant, an aliphatic amide-based lubricant including stearamide, n-butyl stearate, methyl hydroxy stearate, an aliphatic ester-based lubricant such as polyhydric alcohol fatty acid ester, saturated fatty acid ester, or an ester-based wax, and a fatty acid metal soap-based lubricant.

Preferably, the lubricant may be a stearate-based lubricant, and may include at least one selected from the group consisting of calcium stearate, zinc stearate, barium stearate, magnesium stearate, glycerin stearate, and butyl stearate.

Preferably, the lubricant may be a wax-based lubricant, and may include N,N-ethylenebisstearamide.

The lubricant reduces heat generation due to friction during mixing, melting, and processing of raw materials, has an excellent dispersing effect for a biodegradable resin relative to its price, and has an excellent lubricating effect, so that manufacturing efficiency may be improved.

The content of the stearate-based lubricant may be 1,000 ppm to 10,000 ppm, 1,000 ppm to 8,000 ppm, 3,000 ppm to 8,000 ppm, or 4,000 ppm to 6,000 ppm based on the total weight of the biodegradable resin composition.

The content of the wax-based lubricant may be 1,000 ppm to 10,000 ppm, 1,000 ppm to 8,000 ppm, 3,000 ppm to 8,000 ppm, or 4,000 ppm to 6,000 ppm based on the total weight of the biodegradable resin composition.

When the range is satisfied, polymer deterioration due to high temperature during a reaction process may be controlled, so that the terminal group of the polymer may be reduced, and the color may be improved.

The biodegradable resin composition may have a crystallinity of 15 % to 50 % as measured using differential scanning calorimetry.

Preferably, the biodegradable resin composition may have a crystallinity of 15 % to 50 %, 15 % to 40 %, 15 % to 30 %, or 15 % to 25 %. When the range is satisfied, the phenomenon of fiber breakage in the spinning process may be suppressed, and fiber-to-fiber fusion does not occur, thereby enabling denier control of fibers.

The crystallinity may be calculated by the following calculation formula using a crystal-melting energy value and crystal generation energy value measured using differential scanning calorimetry: Crystallinity (%) = [Energy required for melting 1g of biodegradable resin composition (crystal-melting energy (J/g) - crystal-generating energy (J/g)) / energy (J/g) required for melting 1g of biodegradable resin composition with 100% crystallinity] × 100

When the biodegradable resin composition is within the crystallinity range according to the calculation method, this may mean that the biodegradable resin composition has a crystallinity that can be manufactured into a nonwoven fabric by a spinning process, and at the same time, can suppress fiber-to-fiber fusion and fiber breakage during the spinning process.

The crystallinity of the biodegradable resin composition may be controlled depending upon the types and contents of the above-described diol, aliphatic dicarboxylic acid, and aromatic dicarboxylic acid and whether or not an inorganic nucleating agent is included.

The biodegradable resin composition may have a melt flow rate of 10 g/10 min to 25 g/10 min, 10 g/10 min to 20 g/10 min, 10 g/10 min to 15 g/10 min, or 11 g/10 min to 15 g/10 min as measured under conditions of 190 °C and 2.16 kg.

The biodegradable resin composition may have a melt flow rate of 20 g/10 min to 50 g/10 min, 25 g/10 min to 50 g/10 min, 25 g/10 min to 40 g/10 min, or 29 g/10 min to 39 g/10 min as measured under conditions of 230 °C and 2.16 kg.

When the range is satisfied, the amount of the biodegradable resin composition discharged during the spinning process is uniform, so that excellent spinning ability may be achieved, the yarn of a biodegradable nonwoven fabric manufactured from the biodegradable resin composition is not broken, and the tensile strength and elongation may be improved.

The biodegradable resin composition may have an adhesive strength of 5 kgf or less, 4.5 kgf or less, 4.4 kgf or less, or 0.2 kgf or more to 4.4 kgf or less according to Measurement Method 1 below. When the range is satisfied, fibers manufactured from the biodegradable resin composition after the spinning process do not fuse with each other or are not broken.

### [Measurement Method 1]

1) The biodegradable resin composition is compressed at 210 °C under a pressure of 10 MPa for 3 minutes to produce sheets having a width of 20 mm, a length of 100 mm, and a thickness of 0.3 mm.
2) Two of the sheets are placed horizontally with a length of 75 mm facing each other, and then bonded at 90 °C under a pressure of 5 MPa for 10 minutes.
3) To measure the adhesive strength of the two bonded sheets, a 180° lap shear test is performed at a tensile speed of 100 mm/min.

The adhesive strength may be controlled depending upon the types and contents of the above-described diol, aliphatic dicarboxylic acid, and aromatic dicarboxylic acid and whether an inorganic nucleating agent is included.

The biodegradable resin composition may have an isothermal crystallization time of 10 seconds to 300 seconds, 50 seconds to 300 seconds, 100 seconds to 300 seconds, or 114 seconds to 186 seconds at 70 °C, as measured according to Measurement Method 2 below. When the range is satisfied, fibers manufactured from the biodegradable resin composition after the spinning process are not fused to each other or are not broken.

### [Measurement Method 2]

1) The biodegradable resin composition is heated up to 220 °C at a heating rate of 10 °C/min, and then maintained for 5 minutes.
2) Next, the biodegradable resin composition is cooled up to 70 °C at a cooling rate of 100 °C/min, and then an isothermal state is maintained for 100 minutes.
3) Using the differential scanning calorimetry, a time at which the total area of the crystallization peak of the biodegradable resin composition becomes half is measured.

The isothermal crystallization time is to rapidly cool a polymer in a molten state and evaluate the time taken until crystallization.

A short isothermal crystallization time indicates that the crystallization proceeds quickly. A rapid crystallization may mean that molecular motion is suppressed and crystals are formed in a rapid stage after cooling.

The isothermal crystallization time may be controlled depending upon the types and contents of the above-described diol, aliphatic dicarboxylic acid, and aromatic dicarboxylic acid and whether an inorganic nucleating agent is included.

The biodegradable resin composition may have a melting temperature. The biodegradable resin composition may have a melting temperature of 120 °C to 200 °C, 130 °C to 200 °C, 150 °C to 200 °C, or 150 °C to 190 °C. When the range is satisfied, a biodegradable nonwoven fabric manufactured from the biodegradable resin composition may have improved tensile strength and elongation.

The maximum load of the biodegradable resin composition may be 2 kgf to 5 kgf, 2.5 kgf to 5 kgf, 3 kgf to 5 kgf, or 4 kgf to 4.8 kgf.

The yield strength of the biodegradable resin composition may be 0.5 Mpa to 8 Mpa, 0.5 Mpa to 7 Mpa, 1 Mpa to 7 Mpa, 1.2 Mpa to 7 Mpa, or 1.2 Mpa to 5.4 Mpa.

The elongation of the biodegradable resin composition may be 300 % to 700 %, 350 % to 700 %, 400 % to 700 %, 450 % to 700 %, or 500 % to 700 %.

The maximum load, yield strength, and elongation of the biodegradable resin composition may be indicators representing the adhesive strength of the biodegradable resin composition. The maximum load, yield strength, and elongation of the biodegradable resin composition may depend upon the content of the inorganic nucleating agent included in the biodegradable resin composition. When the range is satisfied, the adhesive force of the spun biodegradable resin composition may be reduced, so that a uniform nano-sized fiber phase may be formed, and bead formation of the biodegradable nonwoven fabric may be suppressed.

A method of manufacturing the biodegradable nonwoven fabric according to the present invention may include a step of spinning a biodegradable resin composition to manufacture a biodegradable yarn, a step of cooling the biodegradable yarn, and a step of combining the cooled biodegradable yarn to form a biodegradable yarn web.

FIG. 1 schematically illustrates an apparatus for preparing a biodegradable resin composition according to a first example. Referring to FIG. 1, the apparatus may include a slurry agitator 100, an esterification reaction part 200, a polycondensation reaction part 300, a post-treatment part 400, a first recovery part 510, and a second recovery part 520.

The step of preparing the biodegradable resin composition may include a step of preparing a first slurry including the above-described diol and aromatic dicarboxylic acid.

The step of preparing the biodegradable resin composition may include a step of preparing a second slurry including the above-described diol and aliphatic dicarboxylic acid.

In the step of preparing the first slurry, the diol and the aromatic dicarboxylic acid are fed into and stirred in the slurry agitator 100 to prepare the first slurry. By mixing and pretreating the diol and the aromatic dicarboxylic acid to form a slurry, the diol and the aromatic dicarboxylic acid may be uniformly reacted, and this may be effective in rapidly progressing an esterification reaction, thereby increasing reaction efficiency. In particular, when an aromatic dicarboxylic acid, such as terephthalic acid, has complete crystallinity and is in powder form, its solubility in the diol is very low, making it difficult for a homogeneous reaction to occur. Therefore, the pretreatment process of slurrying may play a very important role in implementing the excellent physical properties of the biodegradable nonwoven fabric according to the present invention.

When the aromatic dicarboxylic acid is terephthalic acid, the terephthalic acid has perfect crystallinity and is a white crystal that sublimates around 300°C at normal pressure without a melting point, so its solubility in the diol is very low, making it difficult for a homogeneous reaction to occur. Accordingly, if a pretreatment process is performed before the first esterification reaction, a uniform reaction may be induced by increasing the surface area for reaction with diol within a solid matrix of terephthalic acid.

When the aromatic dicarboxylic acid is dimethyl terephthalic acid, the dimethyl terephthalic acid may be made in a molten state at about 142°C to 170°C by the pretreatment process to react with the diol. Accordingly, the esterification reaction may proceed more quickly and efficiently.

In the pretreatment step of preparing the first slurry, the structure and properties of the biodegradable resin composition may vary depending upon the particle size, particle size distribution, pretreatment reaction conditions, etc. of the aromatic dicarboxylic acid.

The aromatic dicarboxylic acid may include terephthalic acid. In particle size distribution (PSD), the terephthalic acid may have an average particle diameter (D50) of 10 *µ*m to 400 *µ*m, measured by a particle size analyzer Microtrac S3500, and may have a standard deviation of 100 or less for the average particle diameter (D50). The standard deviation means the square root of the variance. The average particle diameter (D50) of the terephthalic acid may be 20 *µ*m to 200 *µ*m, 30 *µ*m to 180 *µ*m, or 50 *µ*m to 150 *µ*m. When the average particle diameter (D50) of the terephthalic acid satisfies the ranges, it may be more advantageous in terms of improved solubility in diol and a reaction rate.

In the pretreatment process, the diol and the aromatic dicarboxylic acid may be mixed and fed into the slurry agitator (tank) 100.

The slurry agitator 100 may have an anchor-type bottom and a height of 20 mm or more to an agitator. In addition, the slurry agitator 100 may be equipped with 2 or more rotating blades, which may be more advantageous in achieving an efficient stirring effect.

A height to the slurry agitator 100 may be 20 mm or more, i.e., the supply line and the bottom of the agitator may be almost attached to each other. In this case, a slurry may be obtained without precipitation. If the shape, form, and rotating blades of the agitator do not meet the above conditions, the aromatic dicarboxylic acid may sediment to the bottom when diol and aromatic dicarboxylic acid are initially mixed. In this case, phase separation may occur.

The pretreatment process of preparing the first slurry may include a step of mixing the diol and the aromatic dicarboxylic acid and agitating at about 30°C to about 100°C at about 50 rpm to about 200 for 10 minutes or more, or 10 minutes to 200 minutes.

The diol may be the above-described characteristics.

The diol may be added all at once or in divided doses. The diol may be added separately when mixed with aromatic dicarboxylic acid and when mixed with aliphatic dicarboxylic acid. The aromatic dicarboxylic acid may have the above-described characteristics.

In the step of preparing the second slurry, the aromatic dicarboxylic acid is not used.

The diol and the aliphatic dicarboxylic acid may be fed into and stirred in the slurry agitator 100, thereby producing the second slurry.

A pretreatment step of preparing the second slurry may include a step of mixing the diol with the aliphatic dicarboxylic acid and mixing the same at about 50 rpm to about 200 rpm at about 30 °C to about 100 °C for 10 minutes or more, or 10 minutes to 200 minutes.

The diol may have the above-described characteristics.

The diol may be added batchwise or portionwise. The diol may be added portionwise when mixed with the aliphatic dicarboxylic acid. The aliphatic dicarboxylic acid may have the above-described characteristics.

The step may include a step of preparing a prepolymer after an esterification reaction. The step of preparing a prepolymer may be carried out in an esterification reaction part 200.

The esterification reaction may be performed batchwise after adding aliphatic dicarboxylic acid or diol and aliphatic dicarboxylic acid to the first slurry or the second slurry. That is, the first slurry or the second slurry may be fed into the esterification reactor, and the aliphatic dicarboxylic acid alone or the aliphatic dicarboxylic acid and the diol may be fed into the esterification reaction part 200 to perform the esterification reaction.

The esterification reaction may be performed at about 250 °C or lower for about 0.5 hours to about 5 hours.

The esterification reaction may be performed at about 180 °C to about 250 °C, about 185 °C to about 240 °C, or about 200 °C to about 240 °C under normal pressure or reduced pressure until a by-product, water, theoretically reaches 95%.

The esterification reaction may be performed for 0.5 hours to 5.5 hours, 0.5 hours to 4.5 hours or 1 hour to 4 hours, but the present invention is not limited thereto

The first slurry or the second slurry may be mixed with at least one of polycarbonate diol and polyether polyol, and the first esterification reaction may proceed. Alternatively, at least one of the polycarbonate diol and the polyether polyol may be added for a second esterification reaction.

After the first esterification reaction, the mixture of the aliphatic dicarboxylic acid and the diol may be fed into the esterification reaction part 200, and may undergo the second esterification reaction together with the product of the first esterification reaction. In addition, at least one of the polycarbonate diol and the polyether polyol may be added during the second esterification reaction.

The first esterification reaction may be performed at 250 °C or lower for 1.25 hours to 4 hours.

The first esterification reaction may be performed at 180 °C to 250 °C, 185 °C to 240 °C, or 200 °C to 240 °C under normal pressure or reduced pressure until a by-product, water, theoretically reaches 95%.

The first esterification reaction may be performed for 1.25 hours to 4 hours, 1.25 hours to 3.5 hours, or 2.5 hours to 3 hours, but the present invention is not limited thereto.

The second esterification reaction may be performed at about 250 °C or lower for 0.25 hours to 3.5 hours. Specifically, the second esterification reaction may be performed at 180 °C to 250 °C, 185 °C to 240 °C, or 200 °C to 240 °C under normal or reduced pressure until water as a by-product theoretically reaches 95%.

The second esterification reaction may be performed for 0.5 hours to 3 hours, 1 hour to 2.5 hours or 1.5 hours to 2.5 hours, but the present invention is not limited thereto.

When the esterification reaction is divided into the first esterification reaction and the second esterification reaction, the entire esterification reaction may be precisely controlled. When the esterification reaction is divided, the reaction stability and reaction uniformity of the esterification reaction may be improved.

By the esterification reaction, the second prepolymer may be formed.

The number average molecular weight of the prepolymer may be about 500 g/mol to about 10,000 g/mol. The number average molecular weight of the prepolymer may be about 500 g/mol to about 8,500 g/mol, about 500 g/mol to about 8,000 g/mol, about 500 g/mol to about 7,000 g/mol, about 500 g/mol to about 5,000 g/mol, or about 800 g/mol to about 3,000 g/mol. When the range is satisfied, the molecular weight of the polymer may be efficiently increased in a polycondensation reaction.

The number average molecular weight may be measured using gel permeation chromatography (GPC). Specifically, data obtained by gel permeation chromatography includes several items such as Mn, Mw, and Mp, but among these, the number average molecular weight (Mn) can be used as a standard to measure the molecular weight.

The above-described branching agent may be fed into the esterification reaction part 200 during the esterification reaction.

In the esterification reaction, a titanium-based catalyst and/or a germanium-based catalyst may be used. Specifically, the titanium-based catalyst and/or the germanium-based catalyst may be added to the first slurry or the second slurry, and the esterification reaction may be performed.

Before the first esterification reaction, the titanium-based catalyst and/or the germanium-based catalyst may be added to the first slurry or the second slurry, and the titanium-based catalyst and/or the germanium-based catalyst may be further added to a product of the first esterification reaction.

The content of the catalysts may be about 100 ppm to 2,000 ppm based on the total weight of the diol, the aromatic dicarboxylic acid, and the aliphatic dicarboxylic acid. For example, the titanium-based catalyst or the germanium-based catalyst may be included in a content of about 100 ppm to about 1,600 ppm, about 150 ppm to about 1,400 ppm, about 200 ppm to about 1,200 ppm or about 250 ppm to about 1,100 ppm. When the content of the catalyst satisfies the range, the properties may be further improved.

The above-described heat stabilizer may be added together with the slurry before the esterification reaction. The heat stabilizer may be fed into the esterification reaction part 200 during the esterification reaction. After the esterification reaction, the heat stabilizer may be added to the product of the esterification reaction. In addition, the heat stabilizer may be added together with the aliphatic dicarboxylic acid. In addition, the heat stabilizer may be fed into the esterification reaction part 200 after the first esterification reaction and before the second esterification reaction.

The characteristics of the heat stabilizer may be the same as those described above.

After completion of the esterification, one or more selected from the group consisting of an additive such as silica, potassium or magnesium and a color-correcting agent such as cobalt acetate may be further added to the esterification product. That is, after completion of the esterification, the additive and/or the color-correcting agent may be added and stabilized, and then a polycondensation reaction may be performed. The additive and/or the color-correcting agent may be added after completion of the esterification reaction and may be fed into the polycondensation reaction part 300 together with the prepolymer.

After completion of the esterification reaction, the above-described inorganic nucleating agent may be added to the product of the esterification reaction. That is, after the esterification reaction is completed, and then the inorganic nucleating agent is added and stabilized, the polycondensation reaction may be performed. The characteristics of the inorganic nucleating agent are the same as those described above. The inorganic nucleating agent may be fed into the polycondensation reaction part 300 together with the prepolymer, and the polycondensation process may be performed. Accordingly, the inorganic nucleating agent may be uniformly dispersed in the biodegradable resin.

The first recovery part 510 may recover by-products such as water from the esterification reaction part 200. The first recovery part 510 may recover by-products generated from the esterification by applying vacuum pressure to the esterification reaction part 200 or proceeding with reflux.

The step may include a step of polycondensing the prepolymer. The polycondensation reaction may be performed as follows. The prepolymer may be fed into the polycondensation reaction part 300. In addition, the heat stabilizer may be fed into the polycondensation reaction part 300 together with the prepolymer.

The polycondensation reaction may be performed at about 180 °C to about 280 °C and about 10 torrs or less for about 1 hour to about 5 hours. For example, the polycondensation reaction may be performed at about 190 °C to about 270 °C, about 210 °C to about 260 °C, or about 230 °C to about 255 °C, may be performed under about 0.9 torrs or less, about 0.7 torrs or less, about 0.2 torrs to about 10 torr, about 0.3 torrs to about 0.9 torrs or about 0.4 torrs to about 0.6 torr, and may be performed for about 1.5 hours to about 5 hours, about 2 hours to about 4.5 hours, or about 2 hours to about 4 hours.

The polycondensation reaction may include a first polycondensation and a second polycondensation.

The first polycondensation may be performed at about 260 °C or lower, about 250 °C or lower, about 215 °C to about 250 °C, about 215 °C to about 245 °C, or about 230 °C to about 245 °C under about 1 torr to about 200 torr, about 2 torrs to about 100 torr, about 4 torrs to about 50 torr, about 5 torrs to about 45 torr, or about 8 torrs to about 32 torrs for about 0.5 hours to about 3.5 hours, about 0.5 hours to about 3.0 hours, or about 0.5 hours to about 2.8 hours.

The second polycondensation may be performed at about 220 °C to about 265 °C, about 230 °C to about 260 °C, or about 235 °C to about 255 °C under about 1 torr or less, about 0.8 torrs or less, about 0.6 torrs or less, about 0.1 torrs to about 1 torr, about 0.3 torrs to about 0.8 torr, or about 0.4 torrs to about 0.6 torrs for about 0.5 hours to about 4 hours, about 1 hour to about 3.5 hours, or about 1.5 hours to about 3.5 hours.

Before the polycondensation reaction, a titanium-based catalyst or a germanium-based catalyst may be further added to the prepolymer. In addition, before the polycondensation reaction, one or more selected from the group consisting of an additive such as silica, potassium or magnesium; an amine-based stabilizer such as trimethyl phosphate, triphenyl phosphate, trimethyl phosphine, phosphoric acid, phosphorous acid, or tetraethylenepentamine; and a polymerization catalyst such as antimony trioxide, antimony trioxide or tetrabutyl titanate may be further added to the prepolymer.

The number average molecular weight of the polymer may be about 40,000 g/mol or more. The number average molecular weight of the polymer may be about 43,000 g/mol or more, about 45,000 g/mol or more, or about 50,000 g/mol to about 70,000 g/mol. When the range is satisfied, physical properties, impact resistance, durability and formability may be further improved.

The second recovery part 520 may recover by-products such as water from the polycondensation reaction part 300. The second recovery part 520 may apply vacuum pressure to the polycondensation reaction part 300, and may recover by-products generated in the polycondensation reaction.

The second recovery part 520 may apply a vacuum pressure of about 0.1 torrs to about 1 torr to the inside of the polycondensation reaction part 300. The second recovery part 520 may apply a vacuum pressure of about 0.1 torrs to about 0.9 torrs to the inside of the polycondensation reaction part 300.

A chain extender may be added to the polymer. The polymer and the chain extender may be uniformly mixed and maintained at about 200 °C to about 260 °C for about 1 minute to about 15 minutes.

The step may include a step of manufacturing a pellet from the polymer Specifically, the polymer may be cooled to about 15 °C or lower, about 10 °C or lower, or about 6 °C or lower, and then the cooled polymer may be cut and manufactured into a pellet. The cutting step may be performed without limitation using any pellet-cutting machine used in the art, and pellets may have various shapes. As a method of cutting the pellets, an underwater cutting method or a strand cutting method may be used. The pellet may be subjected to an additional post-treatment process.

The pellet may be fed into the post-treatment part 400, and the post-treatment process may proceed. The post-treatment process may be performed in the post-treatment part 400. The pellet may be fed into the post-treatment part 400. Next, the post-treatment part 400 may melt the input pellets by frictional heat and re-extrude them. That is, the post-treatment part 400 may include an extruder such as a twin-screw extruder. The temperature of the post-treatment process may be about 230 °C to about 270 °C The temperature of the post-treatment process may be about 230 °C to about 260 °C. The temperature of the post-treatment process may be about 240 °C to about 265 °C. The temperature of the post-treatment process may be about 240 °C to about 260 °C. The time of the post-treatment process may be about 30 seconds to about 3 minutes. The time of the post-treatment process may be about 50 seconds to about 2 minutes. The time of the post-treatment process may be about 1 minute to about 2 minutes. Next, a resin extruded by the extruder may be cooled, cut, and processed into a post-treated pellet. That is, the resin extruded from the extruder may be reprocessed into a pellet through the cutting step described above.

The prepared biodegradable resin composition may be manufactured into a biodegradable yarn by a spinning process.

The spinning process may include a process in which the biodegradable resin composition is melted and introduced into a spinning block. In the spinning block, the melted biodegradable resin composition may be spun from a nozzle of the extruder. By the spinning block, a filament of the biodegradable resin composition may be formed. The filament may be solidified and crystallized by cooling to produce unstretched biodegradable yarn.

A plurality of nozzles may be provided. The number of the nozzles may be 2 to 30, 10 to 30, or 18 to 30. By the plural nozzles, a plurality of filaments may be produced from the biodegradable resin composition. The pressure of the nozzles may be about 220 °C 80 kg/cm² to 120 kg/cm², 90 kg/cm² to 120 kg/cm², 90 kg/cm² to 110 kg/cm², or 95 kg/cm² to 105 kg/cm². The spinning temperature in the spinning block may be 180 °C to 250 °C, 190 °C to 250 °C, 190 °C to 240 °C, or 190 °C to 230 °C.

The biodegradable resin composition in the spinning process may have a melt flow rate in a specific range.

The biodegradable resin composition may have a melt flow rate of 10 g/10 min to 25 g/10 min, 10 g/10 min to 20 g/10 min, 10 g/10 min to 15 g/10 min, or 11 g/10 min to 15 g/10 min as measured under conditions of 190 °C and 2.16 kg.

The biodegradable resin composition may have a melt flow rate of 20 g/10 min to 50 g/10 min, 25 g/10 min to 50 g/10 min, 25 g/10 min to 40 g/10 min, or 29 g/10 min to 39 g/10 min as measured under conditions of 230 °C and 2.16 kg.

When the ranges are satisfied, the amount of the biodegradable resin composition discharged during a spinning process is uniform, so that excellent spinning ability may be provided, the yarn of a biodegradable nonwoven fabric manufactured from the biodegradable resin composition may not be broken, and tensile strength and elongation may be improved.

The step may include a step of cooling the biodegradable yarn.

The biodegradable yarn may be an unstretched biodegradable yarn produced from the biodegradable resin composition.

The cooling may be performed at about 1 °C to 15 °C, 1 °C to 13°C, 2 °C to 13 °C, or 5 °C to 13 °C. The cooling may be performed in a quenching chamber. The length of the quenching chamber may be about 1 m to 5 m, about 1 m to 4 m, about 1 m to 3 m, or about 1 m to 2 m.

When the range is satisfied, the phenomenon of adjacent unstretched biodegradable yarns fusing together may be suppressed.

The step may include a step of stretching the cooled biodegradable yarn.

By the stretching process, biodegradable yarn stretched 1.1 times to 3 times, 1.2 times to 3 times, 1.2 times to 2.7 times, 1.2 times to 2.6 times, or 1.2 times to 2.5 times compared to unstretched biodegradable yarn may be produced.

As needed, the stretched biodegradable yarn may be thermally treated at an appropriate temperature.

The stretched biodegradable yarn may be wound. The stretched biodegradable yarn may be wound by a winder. The winding speed of the winder may be 300 m/min to 3,000 m/min, 300 m/min to 2,500 m/min, 400 m/min to 2,500 m/min, 500 m/min to 2,500 m/min, or 250 m/min to 2,000 m/min. When the ranges are satisfied, the phenomenon of the biodegradable yarns being fused or disconnected from each other may be suppressed.

The tensile strength of the biodegradable yarn may be 0.5 g/de to 5.0 g/de, 0.5 g/de to 5.0 g/de, 0.5 g/de to 5.0 g/de, 0.5 g/de to 5.0 g/de, or 1.0 g/de to 3.0 g/de. The elongation of the biodegradable yarn may be 20 % to 400 %, 20 % to 300 %, 25 % to 300 %, 25 % to 250 %, 30 % to 250 %, or 35 % to 200 %. The tensile strength of the biodegradable yarn may be 1.0 g/de to 3.0 g/de, and the elongation thereof may be 35 % to 200 %. When the ranges are satisfied, the biodegradable yarns are easily compressed together, so they may be easily applied to a biodegradable nonwoven fabric, and mechanical strength of the biodegradable nonwoven fabric may be improved.

The average diameter of the biodegradable yarn may be 1 *µ*m to 500 *µ*m, 1 *µ*m to 400 *µ*m, 1 *µ*m to 300 *µ*m, 1 *µ*m to 200 *µ*m, or 10 *µ*m to 100 *µ*m. When the ranges are satisfied, the biodegradable yarns may be easily pressed together and easily applied as a biodegradable nonwoven fabric, and the mechanical strength of the biodegradable nonwoven fabric may be improved.

The step may include a step of combining the cooled biodegradable yarn to form a biodegradable yarn web.

The method of combining the biodegradable yarns may be a carding, air-laid, water suspension, or spun bond process.

The carding process may refer to a process in which the biodegradable yarn is stacked on a collector to form a biodegradable yarn web using a device including a plurality of gear wheels.

The air-laid process may refer to a process in which the biodegradable yarn is arranged on a collector to form a biodegradable yarn web using a device moved by a flow of air.

The water suspension process may refer to a process in which the biodegradable yarn is dispersed in water, transported on a wire screen or a perforated drum, and then residual moisture of the transferred biodegradable yarn is sucked, pressurized, and dried to form a biodegradable yarn web.

The spun bond process may refer to a process in which the biodegradable yarn is formed into a Venturi web on a collector and then formed into a biodegradable yarn web.

The step may further include a step of combining the biodegradable yarn webs by at least one process of needle punch, spun lace, stitch bond, calendaring, and air through bonding.

By the process, bonding force between the biodegradable yarn webs may be strengthened, tensile strength and elongation may be improved, and fluffing of the biodegradable nonwoven fabric may be prevented.

The needle punch process may refer to a process in which a needle penetrates the biodegradable yarn web and the biodegradable yarns are entangled with each other by the barbs of the needle.

The spun lace process may refer to a process in which the biodegradable yarn web is combined by spraying a high-pressure water stream on one side and absorbing the high-pressure water stream on the other side.

The stitch bond process may refer to a process in which the biodegradable yarn web is joined by sewing thread and a needle.

The calendaring process may refer to a process of pressurizing the biodegradable yarn web and then thermosetting it.

The air through bonding process may refer to a process of bonding the biodegradable yarn web with high-temperature hot air.

The biodegradable nonwoven fabric according to the present invention may be manufactured by the processes.

The biodegradable nonwoven fabric includes a biodegradable resin composition including the biodegradable resin including the first repeating unit derived from a diol having 2 to 4 carbon atoms and the second repeating unit derived from an aliphatic dicarboxylic acid having 2 to 6 carbon atoms, and an inorganic nucleating agent, and the biodegradable resin composition has a crystallinity of 15 % to 50 %, as measured using differential scanning calorimetry.

As the biodegradable nonwoven fabric is lightweight and has excellent strength, high surface area and porosity, it may be applied to products that require moisture absorption.

The biodegradable nonwoven fabric may include a yarn having an average diameter of 1 *µ*m to 500 ,um, 1 *µ*m to 400 *µ*m, 1 *µ*m to 300 *µ*m, 1 *µ*m to 200 *µ*m, or 10 *µ*m to 100 *µ*m.

The biodegradable nonwoven fabric may be processed. The biodegradable nonwoven fabric may be treated with an antistatic agent to prevent static electricity. The biodegradable nonwoven fabric may be water-repellent treated with a hydrophobic material. The biodegradable nonwoven fabric may be antibacterially treated with an antibacterial material.

The biodegradable nonwoven fabric may be embossed. The biodegradable nonwoven fabric may be printed. The biodegradable nonwoven fabric may be embossed or printed to a thickness and size appropriate for an article to which it is applied.

Hereinafter, the present invention will be described in more detail based on the following examples and comparative examples. However, the examples and comparative examples are provided only as examples to explain the present invention in more detail, and the present invention is not limited by the following examples and comparative examples.

### Preparation Example - Preparation of pretreated nanocellulose

Dry powder-type cellulose nanocrystals (NVC-100, manufacturer: Celluforce) with a particle size of about 1 *µ*m to about 50 *µ*m were dispersed in water at 1 % by weight, and then sonicated for 2 minutes at an output of 20,000 J/s using a tip-type ultrasonic disperser, thereby producing pretreated nanocellulose.

### Example - Preparation of biodegradable resin composition

### Example 1

### - First step: Prepolymer obtainment

1,4-butanediol (1,4-BDO), terephthalic acid (TPA) and tetrabutyl titanate (Dupont, manufactured by Tyzor TnBT), a titanium-based catalyst, were fed into a 5 kg esterification reactor equipped with a nitrogen inlet and a stirrer to prepare a slurry. Here, the molar ratio of 1,4-butanediol:terephthalic acid was 100:47. Next, the slurry was heated up to 210 °C, and an esterification reaction was performed until about 90 % or more of water, a by-product, was discharged, thereby producing the first prepolymer.

Adipic acid (AA) was added to the first prepolymer. Here, the molar ratio of 1,4-butanediol: adipic acid was 100:53, and the molar ratio of terephthalic acid:adipic acid was 47:53.

Next, the pretreated nanocellulose according to the preparation example, triethylphosphonacetate (TEPA) as a heat stabilizer, glycerol(Gly) as a branching agent, and titanium dioxide (TiO₂) as an inorganic nucleating agent were added to the first prepolymer, and then an esterification reaction was performed until about 90 % or more of water, a by-product, was discharged. Next, tetrabutyl titanate (Dupont, manufactured by Tyzor TnBT), a titanium-based catalyst, was added thereto, and then stirred for 10 minutes, thereby producing the second prepolymer.

### - Second step: Polycondensation reaction

The produced second prepolymer in the reactor was transferred to a 5 kg-sized polycondensation reactor. Next, the temperature was slowly heated up to 240 °C under vacuum conditions of about 1 torr or less, and then a polycondensation reaction was performed for about 200, thereby obtaining a biodegradable resin composition.

### Examples 2 to 5 and Comparative Examples 1 to 4

Biodegradable resin compositions were prepared in the same manner as in Example 1 except that the components and contents shown in Table 1 were used to produce the biodegradable resin compositions.

**[Table 1]**

| Classificati on | | uni t | Exa mpl e 1 | Exa mpl e 2 | Exa mpl e 3 | Exa mpl e 4 | Exa mpl e 5 | Comp arative Examp le 1 | Comp arative Examp le 2 | Comp arative Examp le 3 | Comp arative Examp le 4 |
|---|---|---|---|---|---|---|---|---|---|---|---|
| Mon omer | BD O¹⁾ | mo 1% | 100 | 100 | 100 | 100 | - | 100 | 100 | 53 | 100 |
| | EG^{2 )} | | - | - | - | - | 100 | - | - | - | - |
| | SA^{3 )} | | - | 53 | 53 | 26.5 | 26.5 | - | - | 100 | - |
| | AA ⁴⁾ | | 53 | - | 47 | 26.5 | 26.5 | 53 | 53 | - | - |
| | Sb A⁵⁾ | | - | - | - | - | - | - | - | - | 53 |
| | TP A⁶⁾ | | 47 | 47 | - | 47 | 47 | 47 | 47 | 47 | 47 |
| Inorg anic nucle ating agent | TiO 2⁷⁾ | pp m | 3,00 0 | 1,00 0 | 3,00 0 | 2,00 0 | 2,00 0 | - | 20,000 | - | 20,000 |
| Bran ching agent | Gly ⁸⁾ | | 1,50 0 | 1,50 0 | 1,50 0 | 1,50 0 | 1,50 0 | 1,500 | 1,500 | 1,500 | 1,500 |
| Heat stabil izer | TE PA^{9 )} | | 290 | 290 | 290 | 290 | 290 | 290 | 290 | 290 | 290 |
| Addit ive | CN C¹⁰⁾ | | 100 | 100 | 100 | 100 | 100 | - | 100 | - | 100 |
| | CN ¹¹⁾ | | - | - | - | - | - | 100 | - | 100 | - |
| Catal yst | Firs t TB T¹²⁾ | | 235 | 235 | 235 | 235 | 235 | 235 | 235 | 235 | 235 |
| | Sec ond TB T¹³⁾ | | 974 | 974 | 974 | 974 | 974 | 974 | 974 | 974 | 974 |
| 1) BDO: 1,4-Butanediol | | | | | | | | | | | |
| 2) EG: Ethylene Glycol | | | | | | | | | | | |
| 3) SA: Succinic Acid | | | | | | | | | | | |
| 4) AA: Adipic Acid | | | | | | | | | | | |
| 5) SbA: Suberic Acid | | | | | | | | | | | |
| 6) TPA: Terephthalic Acid | | | | | | | | | | | |
| 7) TiO₂: Titanium dioxide | | | | | | | | | | | |
| 8) Gly: Glycerol | | | | | | | | | | | |
| 9) TEPA: Triethyl phosphonoacetate | | | | | | | | | | | |
| 10) CNC: Pretreated nanocellulose | | | | | | | | | | | |
| 11) CN: Cellulose nanocrystal (NVC-100, manufacturer: Celluforce) | | | | | | | | | | | |
| 12) First TBT: Tetrabutyl titanate added during production of first prepolymer | | | | | | | | | | | |
| 13) Second TBT: Tetrabutyl titanate added during production of second prepolymer | | | | | | | | | | | |

### Experimental examples

### Experimental Example 1 - Crystallinity

For the biodegradable resin composition of each of Examples 1 to 5 and Comparative Examples 1 to 4, a crystallinity was calculated according to the following calculation formula using a crystal-melting energy value and crystal generation energy value measured using differential scanning calorimetry. Results are shown in Table 2 below. Crystalinity (%) = [Energy required for melting 1g of biodegradable resin composition (crystal-melting energy (J/g) - crystal-generating energy (J/g)) / energy (J/g) required for melting 1g biodegradable resin compostion with 100% crystallinity] ×100

### Experimental Example 2 - Melt flow rate

According to ASTM D1238, the biodegradable resin composition of each of Examples 1 to 5 and Comparative Examples 1 to 4 was pressed at each of 190 °C and 230 °C using a 2.16 kg weight, and then the amount discharged for 10 minutes was measured. Results are shown in Table 2 below.

### Experimental Example 3 - Isothermal crystallization time

The biodegradable resin composition of each of Examples 1 to 5 and Comparative Examples 1 to 4 was heated up to 220 °C at a heating rate of 10 °C/min, and then maintained for 5 minutes. Next, the temperature was lowered up to 70 °C at a cooling rate of 100 °C/min, and then the isothermal state was maintained for 100 minutes.

Next, a time at which the total area of the crystallization peak measured using the differential scanning calorimetry became half was measured. Results are shown in Table 2 below.

### Experimental Example 4 - Spinning ability evaluation

The spinning ability of the biodegradable resin composition of each of Examples 1 to 5 and Comparative Examples 1 to 4 was evaluated according to the following criteria using a single-fiber spinning facility under the conditions of a spinning speed of 1,500 m/min, a melting temperature of 230 °C, a nozzle temperature of 250 °C, and a quenching air temperature of 20 °C. Results are shown in Table 2 below.
- Excellent: The discharge from the nozzle was smooth during the spinning of the single fiber, the fiber-to-fiber fusion phenomenon did not occur after quenching, and the deviation between the fiber deniers was 20 % or less.
- Satisfactory: The discharge from the nozzle was smooth during the spinning of the single fiber, the fiber-to-fiber fusion phenomenon did not occur after quenching, and the deviation between the fiber deniers was greater than 20 % and 40 % or less.
- Poor: The discharge from the nozzle was impossible during the spinning of the single fiber, or the fiber-to-fiber fusion phenomenon occurred after quenching.

### Experimental Example 5 - Adhesive strength

The biodegradable resin composition of each of Examples 1 to 5 and Comparative Examples 1 to 4 was pressed at 210 °C under a pressure of 10 MPa for 3 minutes to produce sheets with a width of a width 20 mm, a length of 100 mm and a thickness of 0.3 mm. Two of the sheets were placed horizontally with a length of 75 mm facing each other, and then bonded at 90 °C under a pressure of 5 MPa for 10 minutes.

Next, to measure the adhesive strength of the two bonded sheets, a 180° lap shear test was performed at a tensile speed of 100 mm/min. Results are shown in Table 2 below.

### Experimental Example 6 - Biodegradability

For the biodegradable resin composition of each of Examples 1 to 5 and Comparative Examples 1 to 4, aerobic biodegradability was measured for 6 months under the composting conditions according to ISO 14855. Results are shown in Table 2 below.

**[Table 2]**

| Classifica tion | | u ni t | Exam ple 1 | Exam ple 2 | Exam ple 3 | Exa mple 4 | Exa mple 5 | Comp arative Exam ple 1 | Comp arative Exam ple 2 | Comp arative Exam ple 3 | Comp arative Exam ple 4 |
|---|---|---|---|---|---|---|---|---|---|---|---|
| Crystallin ity | | % | 17 | 15.4 | 15 | 15 | 25 | 12 | 55 | 8 | 62 |
| Mel t flo w rate | 19 0 °C | g/ 1 -0 m in | 11 | 12 | 14 | 12 | 15 | 9 | 15 | 7 | 16 |
| | 23 0 °C | | 34.5 | 29 | 39 | 32 | 31 | 24 | 42 | 22 | 41 |
| Isotherma l crystalliz ation time | | se c | 126 | 114 | 186 | 174 | 150 | 520 | 8 | 800 | 6 |
| Spinning ability evaluatio n | | - | Satisfactory | Satisfactory | Satisfactory | Excellent | Excellent | Poor | Poor | Poor | Poor |
| Adhesive strength | | k gf | 4.4 | 0.4 | 3.4 | 0.2 | 2.2 | 6.5 | 0.3 | 12.5 | 0.2 |
| Biodegra dability | | % | 96.3 | 91 | 98.5 | 96.5 | 88.5 | 98 | 65 | 98.5 | 60 |

As shown in Tables 1 and 2, it was confirmed that the biodegradable resin compositions of Examples 1 to 5 exhibited biodegradability the same as or superior to that of the biodegradable resin compositions of Comparative Examples 1 to 4.

In addition, it was confirmed that the biodegradable resin compositions of Examples 1 to 5 exhibited a melt flow rate, isothermal crystallization time, and adhesive strength suitable for manufacturing into a nonwoven fabric by a spinning process, but did not show fiber-to-fiber fusion or fiber breakage after spinning, thereby enabling the denier control of fibers.

### [Description of Symbols]

100: slurry agitator
200: esterification reaction part
300: polycondensation reaction part
400: post-treatment part
510: first recovery part
520: second recovery part

## Claims

1. A biodegradable resin composition, comprising:
a biodegradable resin comprising a first repeating unit derived from a diol having 2 to 4 carbon atoms and a second repeating unit derived from an aliphatic dicarboxylic acid having 2 to 6 carbon atoms; and
an inorganic nucleating agent,
wherein the biodegradable resin composition has a crystallinity of 15 % to 50 % as measured using differential scanning calorimetry.

2. The biodegradable resin composition according to claim 1, wherein a molar ratio of the first repeating unit:the second repeating unit is 4:1 to 1:1.

3. The biodegradable resin composition according to claim 1, wherein the biodegradable resin further comprises a third repeating unit derived from aromatic dicarboxylic acid.

4. The biodegradable resin composition according to claim 3, wherein a molar ratio of the first repeating unit:the third repeating unit is 10:3 to 10:7.

5. The biodegradable resin composition according to claim 3, wherein a molar ratio of the second repeating unit:the third repeating unit is 3:2 to 2:3.

6. The biodegradable resin composition according to claim 1, wherein the inorganic nucleating agent is comprised in a content of 10 ppm to 10,000 ppm based on a total weight of the biodegradable resin composition.

7. The biodegradable resin composition according to claim 1, wherein the inorganic nucleating agent comprises one or more selected from the group consisting of titanium dioxide, talc, kaolinite, montmorillonite, mica, clay, zeolite, silica, graphite, carbon black, mica, barium sulfate, calcium silicate, calcium carbonate, calcium sulfide, calcium titanate, zinc oxide, aluminum oxide, magnesium oxide, neodymium oxide, and boron nitride.

8. The biodegradable resin composition according to claim 1, wherein the biodegradable resin composition comprises nanocellulose having an average length of 10 nm to 300 nm.

9. The biodegradable resin composition according to claim 8, wherein the nanocellulose is comprised in a content of 10 ppm to 500 ppm based on a total weight of the biodegradable resin composition.

10. The biodegradable resin composition according to claim 1, wherein the biodegradable resin composition comprises a branching agent comprising at least one of a trivalent or higher alcohol and a trivalent or higher carboxylic acid.

11. The biodegradable resin composition according to claim 10, wherein the content of the branching agent is comprised in a content of 500 ppm to 3,000 ppm based on a total weight of the biodegradable resin composition.

12. The biodegradable resin composition according to claim 1, wherein the biodegradable resin composition has a melt flow rate of 10 g/10 min to 25 g/10 min, as measured under conditions of 190 °C and 2.16 kg.

13. The biodegradable resin composition according to claim 1, wherein the biodegradable resin composition has an adhesive strength of 5 kgf or less according to Measurement Method 1 below:
[Measurement Method 1]
1) The biodegradable resin composition is compressed at 210 °C under a pressure of 10 MPa for 3 minutes to produce sheets having a width of 20 mm, a length of 100 mm, and a thickness of 0.3 mm.
2) Two of the sheets are placed horizontally with a length of 75 mm facing each other, and then bonded at 90 °C under a pressure of 5 MPa for 10 minutes.
3) To measure an adhesive strength of the two bonded sheets, a 180° lap shear test is performed at a tensile speed of 100 mm/min.

14. The biodegradable resin composition according to claim 1, wherein the biodegradable resin composition has an isothermal crystallization time of 10 seconds to 300 seconds at 70 °C according to Measurement Method 2 below:
[Measurement Method 2]
1) The biodegradable resin composition is heated up to 220 °C at a heating rate of 10 °C/min, and then maintained for 5 minutes.
2) Next, the biodegradable resin composition is cooled up to 70 °C at a cooling rate of 100 °C/min, and then an isothermal state is maintained for 100 minutes.
3) Using the differential scanning calorimetry, a time at which a total area of a crystallization peak of the biodegradable resin composition becomes half is measured.

15. A biodegradable nonwoven fabric, comprising a biodegradable resin composition,
the biodegradable resin composition comprising:
a biodegradable resin comprising a first repeating unit derived from a diol having 2 to 4 carbon atoms and a second repeating unit derived from an aliphatic dicarboxylic acid having 2 to 6 carbon atoms; and
an inorganic nucleating agent,
wherein the biodegradable resin composition has a crystallinity of 15 % to 50 %, as measured using differential scanning calorimetry.
